# EUROPEAN PATENT APPLICATION

(11) **EP 1 526 372 A2**
(43) Date of publication of application: **27.04.2005**
(21) Application number: 04105452.9
(22) Date of filing: 02.11.2004
(51) Int. Cl.: G01N 21/03, B01L 3/00, G01N 27/447, G02B 27/62

(54) **Microfluidic system with adjustment for an optical detection**

(71) Applicant: Agilent Technologies, Inc., Palo Alto, CA 94306 (US)
(72) Inventor: Falk-Jordan, Stefan, 76187, Karlsruhe (DE); Zimmermann, Hans-Peter, 76227, Karlsruhe (DE)
(74) Representative: Barth, Daniel

(57) **Abstract**

A microfluidic device (1, 31, 43, 71, 79) has at least one microfluidic fluidic flow path (15), has at least one inlet port (13), and has at least one optical detection area (19). The optical detection area (19) is optically coupled to the flow path (15). The inlet port (13) is coupled to the flow path (15) also. Besides this, the microfluidic device (1, 31, 43, 71, 79) comprises at least one adjusting device (3, 23, 33, 73, 83). The adjusting device (3, 23, 33, 73, 83) is fixed to the microfluidic device (1, 31, 43, 71, 79) and is adapted for guiding respectively adjusting an optical device (45, 81) relatively to the optical detection area (19) of the microfluidic device (1, 31, 43, 71, 79).

## Description

### BACKGROUND ART

The present invention relates to a microfluidic system with adjustment for an optical detection.

Microfluidic systems and microfluidic optical measuring assemblies are known in the art. They can comprise a microfluidic and an optical device and are employed, for example, for executing a chemical, biological, and or physical analysis of a liquid within the microfluidic device. For this purpose, a microfluidic process, for example an analysis, a separation process, and/or an electrophoresis can be executed with the microfluidic system or rather device. The microfluidic device comprises an optical detection area close to a flow path containing the liquid to be analyzed. For analyzing the liquid a beam or rather a focus of the beam has to be directed to the liquid within the microfluidic device. For detecting components within the liquid or for analyzing the chemical, biological, and/or physical characteristic of the liquid, reflected light, the fluorescence, and/or the absorption of the liquid can be measured. For measuring, the focus of the beam has to be directed very precisely to the liquid or rather to the detection area of the microfluidic device. In other words, the optical device has to be positioned precisely relatively to the detection area of the microfluidic device.

### DISCLOSURE OF THE INVENTION

It is an object of the invention to provide an improved adjusting for microfluidic systems with an optical detection. In particular, to provide an improved positioning of an optical device relative to a microfluidic device with an optical detection area. The object is solved by the independent claims. Preferred embodiments are shown by the dependent claims.

According to the present invention the objects indicated are achieved by a microfluidic system with a microfluidic device and an optical device. Advantageously, the system comprises an adjusting device for at least one of guiding and adjusting the optical device. For running the system, the optical device can be positioned relative to the microfluidic device by the adjusting device. This guarantees a reliable detecting of components within a flow path of the microfluidic device via an optical detection area of the microfluidic device, wherein optical detection area of the microfluidic device is optically coupled to the flow path.

Embodiments may include one or more of the following. The microfluidic device comprises the flow path and the optical detection area. Additionally, the microfluidic device can comprise the adjusting device. Advantageously, the optical device can be coupled directly to the microfluidic device via the adjusting device. The optical device comprises an optical path comprising the focus to be positioned relative to the optical detection area of the microfluidic device. The optical path respectively the focus of the beam can be directed to the optical detection area of the microfluidic device independent of any shocks. The microfluidic device and/or the optical device comprise no other stiff connections to any other component part respectively to the foundation of the complete arrangement. Usually minimal shocks due to, for example, walking, hitting the microfluidic device, or alike can lead to a disadjustment of the optical device. Due to the adjusting device being coupled to or rather coupled stiffly to the microfluidic device and said missing further stiff connections such shocks cannot lead to any disadjustment of the focus of the beam. This guarantees a perfect adjustment between optical and microfluidic components. There is no need for complex and time-consuming adjustment, in particular during measuring. Besides this, the adjusting device enables a small tolerance chain. The tolerance chain comprises only the steps of the microfluidic device itself, the adjusting device, and finally the optical device.

Embodiments may also include one or more of the following. The adjusting device can comprise an inner cylindrically shaped surface. The cylindrically shaped surface can be used for aligning a cylindrically shaped outer surface of the optical device, or reversed. The optical device can be conically adjusted in the direction of the x-axis and the y-axis. Advantageously, the surfaces realize a kind of plug-and-socket connector. Possibly, any other matching inner and outer surfaces of the adjusting device and of the optical device - or reversed - can be used for realizing such a connector, for example punctual, line, oval and/or polygon shaped surfaces.

Embodiments may also include one or more of the following. The adjusting device comprises at least one guiding surface, in particular three elongated guiding surfaces. The guiding surfaces can be arranged three-dimensionally for guiding an according counter bearing of the optical device for aligning the optical device. The elongated guiding surfaces can be part of guiding ribs. The guiding ribs can be arranged three-dimensionally in an angle of 120° to each other and can be arranged in parallel to each other. Guiding surfaces arranged like this can conically guide an outer cylindrical surface realizing the counter bearing of the optical device. Additionally, one of the guiding surfaces can realize a limit stop for adjusting the optical device additionally in the direction of the z-axis. Possibly the adjusting device can comprise at least one or rather a plurality of punctual guiding surfaces, for example, a plurality of naps.

Advantageously, the knobs and/or the ribs of the optical device can comprise an elastic respectively elastomeric material. By this, the functionality of a press fit between the adjusting device and the optical device can be realized. Advantageously, occurring friction force for realizing the press fit are relatively low. Due to the elasticity of the guiding device an exact conical lining is possible. For this purpose, advantageously, the adjusting device comprises a hollow cylinder, and the optical device comprises an according outer cylindrical surface to be inserted into the hollow cylinder. The inner surface of the hollow cylinder can realize the guiding surface or can comprise the ribs, and/or naps as described above realizing the guiding surfaces. Advantageously, the inner surface of the hollow cylinder of the adjusting device comprises three elongated parallel ribs each comprising one guiding surface.

Besides this the invention relates to a microfluidic optical measuring assembly. The measuring assembly comprises a microfluidic system with a microfluidic device and an optical device. Advantageously, the assembly comprises a microfluidic device as described above. The optical device is positioned exactly relatively to the optical detection area of the microfluidic device by the adjusting device of the microfluidic device. Embodiments may comprise one or more of the following. The assembly can comprise a positioning system, in particular a positioning robot, coupled to the microfluidic device. The positioning system can be used for positioning the microfluidic device relatively to any connecting element, such as high-pressure fluidic ports, electrical contacts, detectors, and/or heating or cooling elements.

Besides this, the positioning system can be used for preliminarily aligning the microfluidic device with the optical device. The final and precise aligning of the optical device can be realized by the adjusting device of the microfluidic device. Due to any elasticity within the whole assembly, a slightly inexact positioning of the microfluidic device by the positioning system can be equalized by the adjusting device of the microfluidic device.

Advantageously, the microfluidic device is coupled to the robot via an adapter plate being coupled to the microfluidic device. The adapter plate can comprise connecting elements for connecting the microfluidic device to the adapter plate. Besides this, the adapter plate can comprise standardized connection elements for a laboratory apparatus, such as an automatic sampler or alike. Consequently, the microfluidic device can be positioned relatively to the optical device and to the connection elements of the laboratory apparatus together with the adapter plate.

Advantageously, the assembly can be aligned to a reference location. Advantageously, the microfluidic device of the assembly and the optical device are both coupled to this reference location. For realizing this, the microfluidic device can be coupled to the reference location by the robot. The optical device can be coupled to the reference location via an attenuation mounting, in particular a bump rubber. The attenuation mounting is adapted for equalizing any small movements of the optical device relatively to the reference location. The attenuation mounting is fixed to the reference location and at the tube respectively the cover of the optical device. Advantageously, the attenuation mounting comprises an additional a damper. Such an attenuation mounting comprising a damper can be realized for example by the said bumper rubber.

Additionally, the present invention relates to a microfluidic device as included in the microfluidic system or in the microfluidic optical measuring assembly as described above. Advantageously, the adjusting device is fixed to the microfluidic device for realizing a stiff coupling or a guide for another device, for example an optical device as described above.

Another aspect of the invention is a method for adjusting an optical device relatively to a microfluidic device. In a first step, the optical device is adjusted preliminarily relative to a reference location. The microfluidic device is then adjusted preliminarily relative to the same reference location. Finally, the optical device is positioned exactly relative to the microfluidic device by the adjusting device coupled to the microfluidic device. The adjusting device is fixed to the microfluidic device. This guarantees a very stiff and shock-indifferent coupling of the optical device to the microfluidic device.

### BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawing(s). Features that are substantially or functionally equal or similar will be referred to with the same reference sign(s).

Fig. 1 shows a top plan view of a microfluidic device with an adjusting device, namely a hollow cylinder fixed to the microfluidic device;

Fig. 2 shows a top plan view of the microfluidic device of Fig. 1, but with another adjusting device comprising three guiding surfaces;

Fig. 3 shows a longitudinal cut of a microfluidic system with an optical device and with a microfluidic device having an adjusting device;

Fig. 4 shows a front view of a microfluidic optical measuring assembly with a positioning system and with a microfluidic system having a microfluidic device and an optical device;

Fig. 5 shows a front view of another microfluidic optical measuring assembly, wherein the microfluidic device comprises an adapter plate.

Fig. 6 shows a sectional front view of another microfluidic optical measuring assembly, wherein the microfluidic device is coupled to an adapter plate.

Fig. 6A shows a detailed sectional front view of an adjusting device of the microfluidic optical measuring assembly of Fig. 6;

Fig. 6B shows a detailed sectional front view of a beam hitting the microfluidic device of the microfluidic optical measuring assembly of Fig. 6;

Fig. 7 shows a three-dimensional front view of the microfluidic optical measuring assembly of Fig. 6.

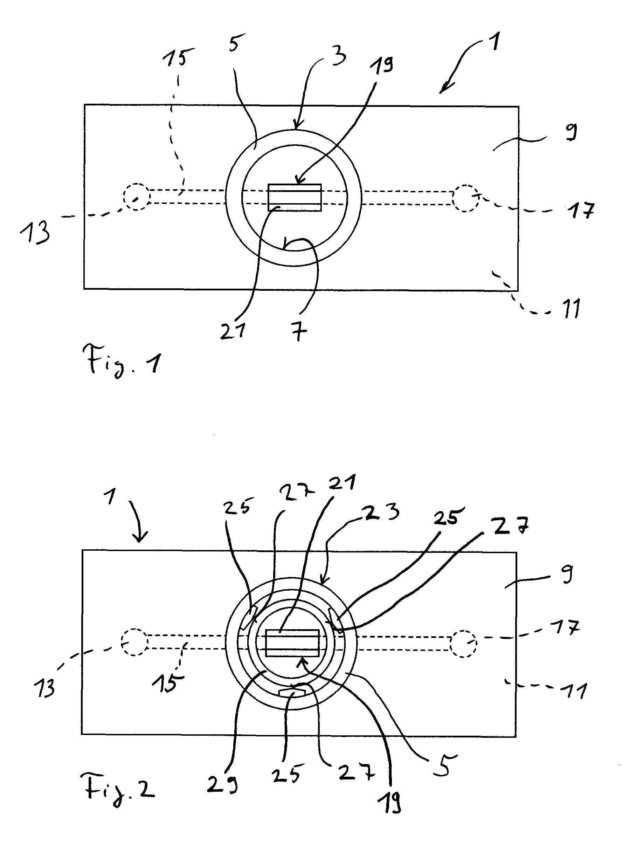

Fig. 1 shows a microfluidic device 1 with an adjusting device 3. The microfluidic device 1 can be realized as a highly integrated microfluidic chip comprising, for example, polyimide and/or glass. The adjusting device 3 of the microfluidic device 1 is realized as a hollow cylinder 5. The hollow cylinder 5 is fixed to the microfluidic device 1 and comprises an inner cylindrical surface 7. The inner surface 7 or rather the hollow cylinder 5 is positioned perpendicularly to the microfluidic device 1 or rather to the picture plane of Fig. 1.

The microfluidic device 1 can be realized as a microfluidic chip comprising different layers, for example comprising a multilayer structure. At least one of the layers comprises at least one inlet and/or outlet port and at east one of the layers comprises a flow path being coupled to the port respectively ports. In this embodiment the microfluidic device comprises a top layer 9 and a bottom layer 11 not visible in Fig. 1. The bottom layer 11 of the microfluidic device 1 comprises at least one inlet port 13 being coupled to a flow path 15. The flow path 15 is coupled to an outlet port 17 of the microfluidic device 1. The ports 13 and 17 and the flow path 15 are realized in the bottom layer 11 of the microfluidic device. Therefore they are not visible in Fig. 1 and consequently symbolized with dotted lines.

Close to the flow path 15 the microfluidic device comprises an optical detection area 19. Therefore, the microfluidic device or rather the layers 11 and 13 of the microfluidic device 1 can comprise a transmissible material 21, for example glass. The detection area 19 of the microfluidic device 1 or rather the flow path 15 or rather the liquid contained in the flow path 15 of the microfluidic device 1 can be illuminated by a light source. For analyzing the liquid within the flow path 15, the emitted light, the fluorescence, or the light absorption rate of the liquid contained within the flow path 15 can be measured by a not shown detector. The microfluidic device 1 as shown in Fig. 1 is illustrated schematically. Such microfluidic devices can be used for a variety of biological, chemical, and/or physical analyses, such as separations or electrophoreses. Therefore, the flow path 15 of the microfluidic device 1 can comprise a separation column or a gel for an electrophoresis as known in the art. Separated substances of the liquid can be detected by the detection area 19 and an according optical device. Analytical processes executed with microfluidic devices, in particular with microfluidic chips, are known in the art and are therefore not described in detail in this application.

Generally, optical devices can serve as a light source for illuminating the liquid within the flow path 15 of the microfluidic device 1. Optical devices as known in the art comprise for example a tube. The tube can comprise a lens system for focusing a beam to the flow path 15 of the microfluidic device. For achieving a good analyzing result, the spot of the beam can have a diameter of approximate 5, preferably more than 2 and less than 10 micrometers (µm). Typical flow paths as comprised in the microfluidic device 1 have a wide as small as 35 micrometers (µm). For avoiding any wall effects, the spot of the beam should be positioned in a typical tolerance of 10 µm. Compared with the other tolerances of the connections of the microfluidic device, this is a very low value.

The microfluidic device 1 can be coupled to not shown flow sources, current sources, pressure sources, or thermal sources. A fluidic connection should be typically realized with a tolerance of 100 µm. A voltage and/or current source, or a pressure source should be contacted with a typical tolerance of 300 µm. Thermal sources can be connected to the microfluidic device 1 normally with a tolerance of 1000 µm. It can be seen, that the lowest tolerance of 10 µm of the optical device usually determines the positioning tolerance of the microfluidic device.

Advantageously, the tube of the optical device comprises a cylindrical outer surface. This surface can be put into the hollow cylinder of the adjusting device 3. By this, the tube of the optical device or rather the whole optical device can be aligned rotationally or rather in the direction of the x-axis and the y-axis. This means, the lowest tolerance of the optical device is realized by the adjusting device being fixed to adjusting device 3 being fixed to the microfluidic device 1. Because of the compared stiff-connection between the microfluidic device 1 and the adjusting device 3, the tolerance of 10 µm can be easily realized. All other connections of the microfluidic device can be realized in the lower tolerances.

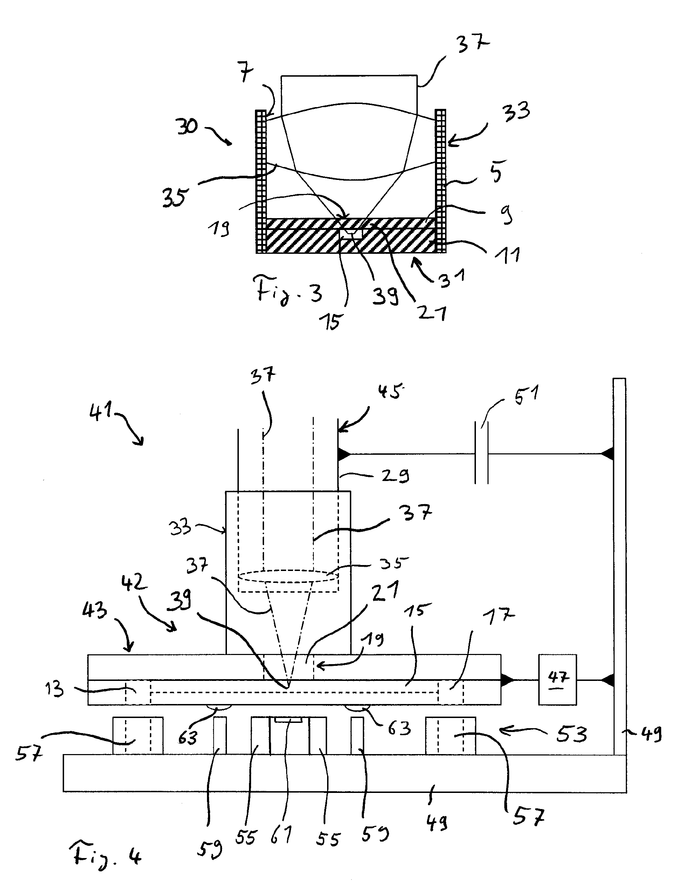

Fig. 2 shows the microfluidic device 1 as shown in Fig. 1, but with another adjusting device 23 comprising longitudinal ribs 25.

The adjusting device 23 comprises three ribs 25 protruding towards the middle axis of the hollow cylinder 5 of the adjusting device 23. The ribs 25 comprise a partly triangularly crosscutting for realizing a line-shaped longitudinal guiding surface 27. The line-shaped guiding surfaces 27 of the ribs 25 can be brought in contact with the cylindrical tube 29 as symbolized in Fig. 2 with two circles. The ribs 25 or rather the guiding surfaces 27 are arranged three-dimensionally parallel to each other and in parallel to the middle-axis of the hollow cylinder 5 of the adjusting device 23, for example rotationally symmetric to the middle-axis of the hollow cylinder 5. By this, an exact rotational or rather concentric alignment of the tube 29 of the not shown optical device can be realized. Possibly, the hollow cylinder 5 of the adjusting device 23 can comprise more or less than three ribs 25 for realizing the alignment.

Possibly, the adjusting device 23 can comprise a plurality of punctual guiding surfaces, such as naps or alike. Advantageously, the adjusting device 23 or rather the ribs 25 of the adjusting device 23 can comprise an elastic material. Therefore, the outer cylindrical surface of the tube 29 or rather of the body of the not shown optical device and the ribs 25 of the adjusting device 23 can realize a press fit. Such a press fit realized by line shaped surfaces, can be made with low frictional forces. Besides this, the ribs 25 of the adjusting device 23 can be an integral part of the hollow cylinder 5 of the adjusting device 23 or can be separate parts. For this purpose the ribs 25 can be bonded, glued, soldered, or alike.

Fig. 3 shows a longitudinal cut of a microfluidic system 30 with a microfluidic device 31 comprising an adjusting device 33. The adjusting device comprises a lens 35. The microfluidic device 31 of the microfluidic system 30, the adjusting device 33, and the lens 35 of the microfluidic system 30 are stiffly coupled to each other. Therefore, a beam 37 can be focused on the detection area 19 or rather on the flow path 15 of the microfluidic device 31. The beam 37 comprises a spot 39 being located ideally in the middle of the flow path 15 of the microfluidic device 31 of the microfluidic system 30. The beam 37 can be produced by any light source, for example a laser.

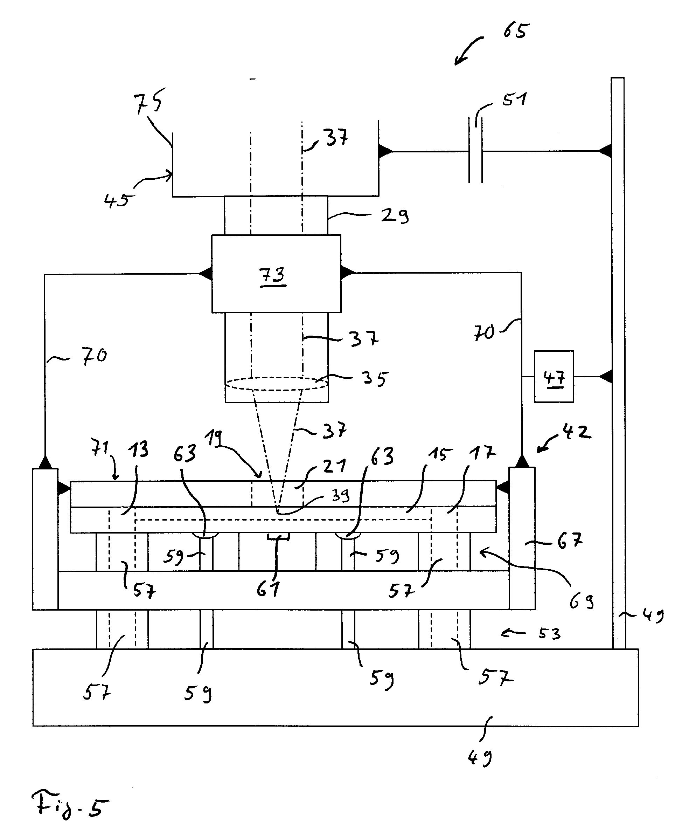

Fig. 4 shows a side view of a microfluidic optical measuring assembly 41 with a microfluidic system 42. The microfluidic system 42 comprises a microfluidic device 43 and an optical device 45. Besides this, the microfluidic optical measuring assembly 41 comprises a positioning system 47. The optical device 45 of the microfluidic system 42 comprises the tube 29 and is not completely shown in Fig. 4. The beam 37 with the spot 39 on the flow path 15 of the microfluidic device 33 is indicated with dash-dotted lines in Fig. 4. The tube 29 is put partly into the hollow cylinder 5 of the adjusting device 3 of the microfluidic device 43 of the microfluidic system 42. Therefore, not visible parts of the tube 29, for example the lens 35 of the tube 29 are indicated with dotted lines.

The positioning system 47 is coupled to a reference location 49. The reference location can be realized as a wall or as a relatively stiff and heavy table, for example an optical measuring table. The optical device 45 of the microfluidic system 42 or rather the tube 29 of the optical device 45 is coupled to the same reference location 49. Advantageously, the optical device 45 of the microfluidic system 42 can be coupled to the reference location 49 via an attenuation mounting 51. Attenuation mountings are known in the art and employed for equalizing small relative movements. The attenuation mounting 51 can be realized for example as a bump rubber. The attenuation mounting 51 is fixed to the reference location 49 and at the tube 29 of the optical device 45 of the microfluidic system 42. Advantageously, the attenuation mounting 51 comprises an additional damper. Such an attenuation mounting 51 comprising a damper can be realized for example by the said bumper rubber.

The reference location 49 comprises connecting elements 53, two ports 57, two electrical contacts 59 and one optical detector 61. Additionally, the reference location 49 can comprise heating and/or cooling elements 55. The liquid within the flow path 15 of the microfluidic device 43 of the microfluidic system 42 can be cooled or heated by the elements 55 for running a temperature critical process with the microfluidic device 43 of the microfluidic system 42, such as a PCR-reaction. For this purpose, the microfluidic device 43 of the microfluidic system 42 can additionally comprise a not shown reaction chamber.

The connecting elements 53 respectively the ports 57 of the connecting elements 53 can be connected to the ports 13 and 17 of the microfluidic device 43 of the microfluidic system 42, and the electrical contacts 59 of the connecting elements 53 to electrical contacts 63 of the microfluidic device 43 of the microfluidic system 42. The arrangement of the connecting elements 53 respectively of the ports 57 of the connecting elements 53 depends on the type and on the assembling position of the microfluidic device and may consequently vary. Therefore, the microfluidic device 43 of the microfluidic system 42 can be positioned relatively to the connecting element 53 of the reference location 49 by the positioning system 47. The microfluidic device 43 of the microfluidic system 42 can be employed for an electrophoresis, for example.

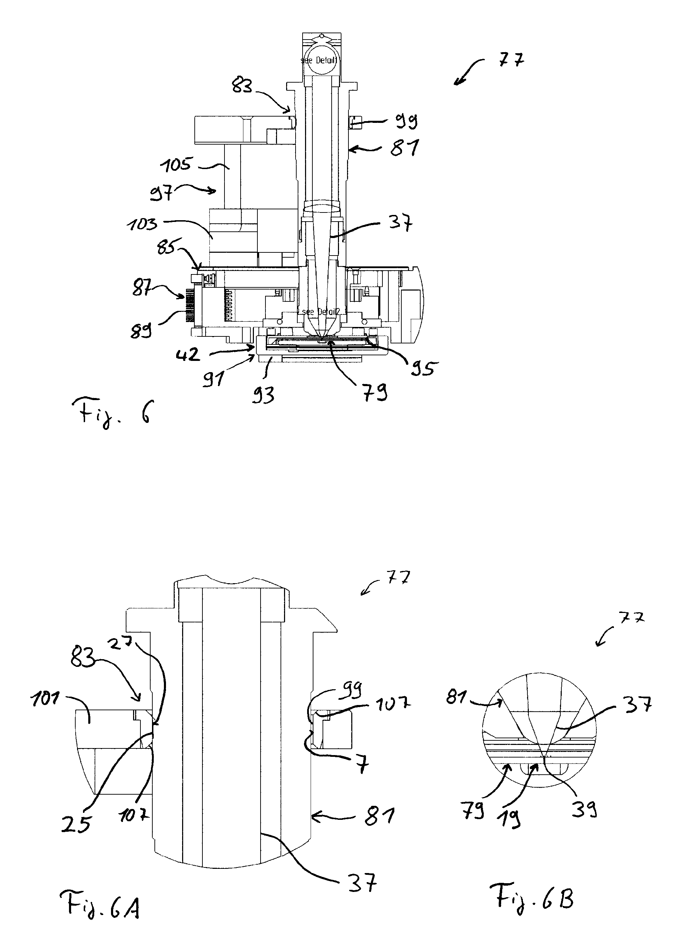

Fig. 5 shows another microfluidic optical measuring assembly 65. In difference, the assembly 65 comprises an additional adapter plate 67. The adapter plate 67 comprises connecting element 59 according to a connecting element 53 of the reference location 49 as described above. As a further difference, the assembly 65 or rather the microfluidic system 42 of the assembly 65 as described in Fig. 5 comprises a microfluidic device 71 without an adjusting device. Consequently, the adapter plate 67 can hold any microfluidic device as known in the art. The microfluidic device 71 of the microfluidic system 42 is positioned relatively exactly to the adapter plate 67 of the assembly 65.

As a further difference, the microfluidic system 42 of the assembly 65 comprises an adjusting device 73, wherein the adapter plate 67 is coupled to the adjusting device 73 via stiff fixing elements 70. Besides this, the adapter plate 67 can be coupled to the connecting elements 69 of the adapter plate 67. The adjusting device 73 being fixed to the adapter plate 67 of the assembly 65 is designed same as described above.

The positioning system 47, for example a positioning robot, is coupled stiffly to the adapter plate 67 and to the adjusting device 73. Due to the stiff connection between the adapter plate 67 and the microfluidic device 71 of the microfluidic system 42 of the assembly 65, the optical device 45 of the microfluidic system 42 can be rotationally adjusted to the adjusting device 73 of the microfluidic system 42 being itself adjusted relatively exactly to the adapter plate 67 via the stiff fixing elements 70. The adjustment of the spot 39 of the beam 37 of the optical device 45 of the microfluidic system 42 in the direction of the z-axis can be done by sliding the tube 29 of the optical device 45 of the microfluidic system 42 within the adjusting device 33. For assisting the alignment in direction of the z-axis, the optical device 45 of the microfluidic system 42 can comprise an auto focus device as known in the art. Consequently, the optical device 45 of the microfluidic system 42 has to be positioned roughly in direction of the z-axis. The precise adjustment can be done by the auto focus device (not shown in Fig. 5). As a further difference, the attenuation mounting 51 is fixed to the reference location 49 and at the cover 75 of the optical device 45 of the microfluidic system 42.

In embodiments, the attenuation mounting 51 is not necessary. This can be compensated by an exact alignment of the components of the assembly 41. Small tolerances can be adjusted by the elasticity's of the components of the assembly 41 respectively 65.

The attenuation mounting 51 operates as a shock absorber for the optical and for the microfluidic device.

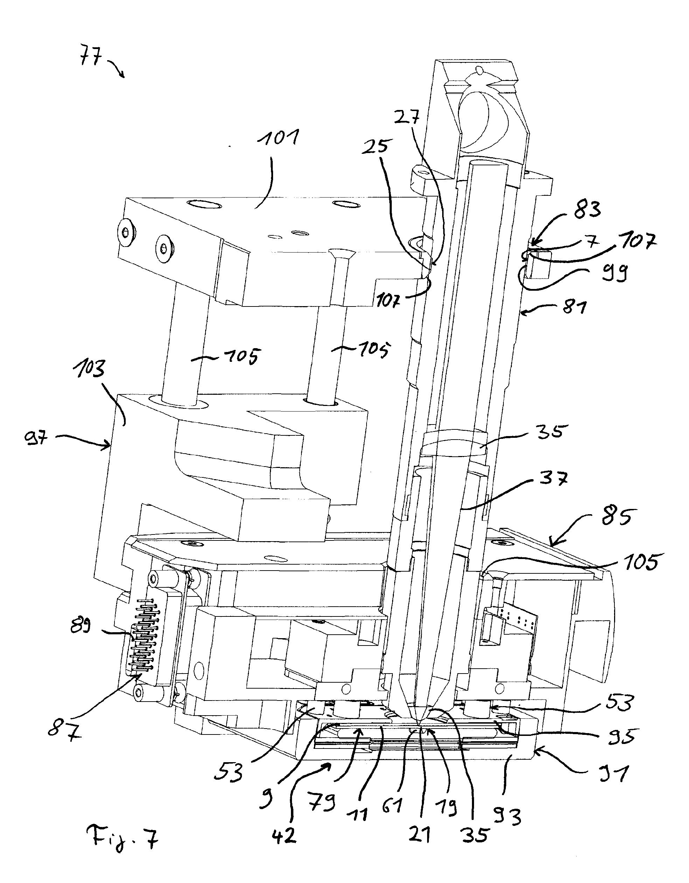

Fig. 6 shows a sectional front view of another microfluidic optical measuring assembly 77 with a microfluidic device 79, for example a microfluidic chip comprising glass layers 9 and 11, an optical device 81, and an adjusting device 83.

Fig. 6A shows a detailed sectional front view of the adjusting device 83 of the microfluidic optical measuring assembly 77 of Fig. 6;

Fig. 6B shows a detailed sectional front view of a beam 37 hitting the microfluidic device 79 of the microfluidic optical measuring assembly 77 of Fig. 6;

Fig. 7 shows a three-dimensional front view of the microfluidic optical measuring assembly 77 of Fig. 6.

The assembly 77 comprises a supply unit 85 for supplying the microfluidic device 79 of the microfluidic system 42 with high voltage, pressure, fluids, heat, air, etc. The supply unit 85 comprises an interface 87 with a plurality of connectors for supplying the supply unit 85. The supply unit can be connected to an adapter 91 with an adapter plate 93 and an adapter cover 95. The adapter cover 95 can be opened for changing and/or maintaining the microfluidic device 79 of the microfluidic system 42. Besides this, the adapter cover 95 comprises not visible connecting elements adapted for connecting ports, contacts, or alike of the microfluidic device 79 of the microfluidic system 42. The adapter cover 95 of the adapter 91 can be connected to the supply unit 85 via connecting elements 53. The microfluidic device 79 of the microfluidic system 42 can be supplied via the plurality of connectors 89 of the interface 87, via the supply unit 85, via the connecting elements 53, and via the adapter cover 95 of the adapter 91.

The microfluidic device 79 of the microfluidic system 42 or rather the adapter 91 is aligned relative to the optical device 81 of the microfluidic system 42 via a positioning robot 97. Advantageously, the adapter 91 can be moved and disconnected from the connecting elements 53 for changing or maintaining the microfluidic device 79 of the microfluidic system 42 by actuating the positioning robot 97 accordingly. After that, the exact position of the microfluidic device 79 of the microfluidic system 42 to the optical device 81 of the microfluidic system 42 can be reproduced exactly by the positioning robot 97.

The positioning robot 97 can be realized as a learning robot for a repeatable exact positioning of the microfluidic device 79 of the microfluidic system 42 or rather of the adapter 91. In this case, for the alignment in the directions of the x-axis and the y-axis the positioning robot 97 has to be realized at least as a three-axis articulated robot, wherein the movement in direction of the z-axis is used for separating the microfluidic device 79 of the microfluidic system 42 and the optical device 81 of the microfluidic system 42 for changing and/or maintaining. Such a robot can equalize tolerances in the coupling of the microfluidic device 79 of the microfluidic system 42 to the optical device 81 of the microfluidic system 42.

In other embodiments, the positioning robot 97 can be realized just as a single-axis articulated robot. The alignment of the optical device 81 of the microfluidic system 42 can be guaranteed by the adjusting device 73 of the assembly 77. Once aligned in the directions of the x-axis and the y-axis, no further alignment of the optical device 81 of the microfluidic system 42 relative to the microfluidic device 79 of the microfluidic system 42 is necessary.

The adjusting device 73 is realized as a hollow cylinder 99 or rather a ring. The hollow cylinder 99 can have an inner diameter of 32 mm. Other diameters are possible. The hollow cylinder 99 or rather the ring of the adjusting device 83 is recessed in a plate 101 of the positioning robot 97 being connected to a body 103 of the positioning robot 97 via two cylinders 105 of the positioning robot 97. The tolerance chain for positioning the spot 39 of the beam relative to the detection area 19 of the microfluidic device 79 of the microfluidic system 42 is determined by the adapter 91, a not visible actuated arm of the positioning robot 97, the body 103, the cylinders 105, the plate 101 of the positioning robot 97, and the hollow cylinder 99. Advantageously, any tolerances can be adjusted by the positioning robot 97. The elements of the tolerance chain realize the stiff connection or rather the coupling for the adjusting device 83 respectively the hollow cylinder 99 to the microfluidic device 79 of the microfluidic system 42.

The optical path or rather the beam 37 or rather the tube 29 of the optical device 81 of the microfluidic system 42 goes through the supply unit 85 of the assembly 77. Therefore, the supply unit 85 comprises a breakthrough, in particular a cylindrically shaped breakthrough 105 for the tube 29 of the optical device 81 of the microfluidic system 42.

For an optimal leading in of the tube 29 of the optical device 81 of the microfluidic system 42 into the hollow cylinder 99, the hollow cylinder 99 or rather the ring of the adjusting device 83 can comprise one or two chamfers 107.

The optical device comprises two lenses 35. Advantageously, the lens 35 for focusing the beam 37 finally can be part of the microfluidic device 79 of the microfluidic system 42 or of the adapter plate 93. For this purpose, the lens 35 can be fixed to the microfluidic device 79 of the microfluidic system 42 or to the adapter plate 93 of the adapter 91.

Possibly, the adjusting device can comprise a conductive material, for example for connecting the microfluidic device to the ground via the optical device, or reversed.

In the following a method of adjusting an optical device relatively to a microfluidic device is described in detail by referring to the Figures above.

In a first step, the optical device 45 of the microfluidic system 42 is adjusted preliminarily relative to the reference location 49. Therefore, the optical device 45 of the microfluidic system 42 is coupled to the reference location 49 via the attenuation mounting. In a second step, the microfluidic device 43 of the microfluidic system 42 or 71 is adjusted preliminarily relative to the same reference location. This can happen by the positioning system 47. The second step can be executed before or concurrently to the first step. As a third step, the optical device 45 of the microfluidic system 42 is adjusted relative to the microfluidic device 43 of the microfluidic system 42. The tube 29 or rather the optical device 45 of the microfluidic system 42 with the tube 29 is positioned exactly relative to the microfluidic device 43 or rather to the adjusting device 73 of the microfluidic system 42. For this purpose, the tube 29 of the optical device 45 of the microfluidic system 42 can be slit through the hollow cylinder 5 of the optical device 45 of the microfluidic system 42. After that, the tube 29 of the optical device 45 of the microfluidic system 42 can be coupled to a cover 75 of the optical device 45 of the microfluidic system 42, for example a bayonet or by a screwing of the optical device 45 of the microfluidic system 42 or rather of the cover 75 of the optical device 45 of the microfluidic system 42.

In embodiments, the third step can be executed as first one followed by the steps one and two, wherein the steps one and two are executed concurrently. Therefore, the microfluidic and the optical device can be adjusted together relative to the connection elements 53 by the positioning system 47.

The microfluidic system is adapted for analyzing liquid. More specifically, the microfluidic system is adapted for executing at least one microfluidic process, for example an electrophoresis and/or a liquid chromatographic process, for example a high performance liquid chromatographic process (HPLC). Therefore, the microfluidic system can be coupled to a liquid delivery system, in particular to a pump, and/or to a power source. Otherwise, the microfluidic system can be coupled to a laboratory apparatus, for example to a mass spectrometer, for analyzing the liquid. For executing an electrophoresis, the flow path can comprise a gel. Besides this, the microfluidic system can be a component part of a laboratory arrangement.

It is to be understood that this invention is not limited to the particular component parts of the devices described or to process steps of the methods described as such devices and methods may vary. It is also to be understood, that the terminology used herein is for purposes describing particular embodiments only and it is not intended to be limiting. It must be noted that, as used in the specification and the appended claims, the singular forms of "a", "an", and "the" include plural referents until the context clearly dictates otherwise. Thus, for example, the reference to "an adjusting device" or "a microfluidic flow path" includes two or more such functional elements.

## Claims

1. A microfluidic system (30;42) comprising:
a microfluidic device (1, 31, 43, 71, 79),
an optical device (45,81),
a microfluidic flow path (15),
an optical detection area (19) optically coupled to the flow path (15), and
an adjusting device (3, 23, 33, 73, 83) coupled to the microfluidic device (1, 31, 43, 71, 79) and adapted for at least one of guiding and adjusting the optical device (45, 81 ) relative to the optical detection area (19) of the microfluidic device (1, 31, 43, 71, 79).

2. The microfluidic system of claim 1 or any one of the above claims, wherein the adjusting device (3, 23, 33, 73, 83) comprises an inner cylindrically shaped surface (7).

3. The microfluidic system of claim 1 or any one of the above claims, wherein the adjusting device (3, 23, 33, 73, 83) comprises at least one guiding surface (27), in particular three elongated guiding surfaces (27), preferably three line-shaped guiding surfaces (27).

4. The microfluidic system of the above claim, wherein the adjusting device (3, 23, 33, 73, 83) comprises at least one, in particular three, guiding ribs (25) comprising the guiding surface (27).

5. The microfluidic system of the above claim, wherein the adjusting device (3, 23, 33, 73, 83) comprises three elongated parallel ribs (25), in particular three elongated parallel ribs (25) being arranged in an angle of 120° to each other.

6. The microfluidic system of claim 1 or any one of the above claims, wherein the adjusting device (3, 23, 33, 73, 83) comprises a hollow cylinder (5, 99), in particular a hollow cylinder (5, 99) comprising the guiding surface (27), preferably comprising the three elongated parallel ribs (25).

7. A microfluidic optical measuring assembly (41, 65, 77) comprising a microfluidic system (30;42) of claim 1 or any one of the above claims, wherein the optical device (45, 81) is positioned exactly relative to the optical detection area (19) of the microfluidic device (1, 31, 43, 71, 79) by the adjusting device (3, 23, 33, 73, 83).

8. The microfluidic assembly of claim 7 or any one of the above claims, wherein the assembly (41, 45) comprises a positioning system (47), in particular a positioning robot (97), coupled to the microfluidic device (1, 31, 43, 71, 79).

9. The microfluidic assembly of the above claim, wherein the microfluidic device (1, 31, 43, 71, 79) is coupled to the robot (97) via an adapter plate (67, 93) being coupled to the microfluidic device (1, 31, 43, 71, 79).

10. The microfluidic assembly of claim 7 or any one of the above claims, wherein the microfluidic device (1, 31, 43, 71, 79) and the optical device (45, 81) are both coupled to the same reference location (49).

11. The microfluidic assembly of the above claim, wherein the assembly (41, 65, 77) comprises at least one of the following features:
- the microfluidic device (1, 31, 43, 71, 79) is coupled to the reference location (49) via the robot (97),
- the optical device (45, 81) is coupled to the reference location (49) via an attenuation mounting (51), in particular a bump rubber.

12. A microfluidic device as comprised in claim 1 or any one of the above claims, wherein the adjusting device (3;23) is fixed to the microfluidic device (1).

13. A method of adjusting an optical device, in particular an optical device as comprised in claim 1 or any one of the above claims, relative to a microfluidic device, in particular a microfluidic device as comprised in claim 1 or any one of the above claims, comprising in any order the steps of:
- preliminary adjusting the optical device (45, 81) relative to a reference location (49),
- preliminary adjusting the microfluidic device (1, 31, 43, 71, 79) relative to the same reference location (49), and
- adjusting the optical device (45, 81) relative to the microfluidic device (1, 31, 43, 71, 79) by the adjusting device (3, 23, 33, 73, 83) coupled to the microfluidic device (1, 31, 43, 71, 79).
